(19) Europäisches Patentamt
European Patent Office
Office européen des brevets

(11) **EP 2 610 236 A1**

(12) **DEMANDE DE BREVET EUROPEEN**

(43) Date de publication:
**03.07.2013 Bulletin 2013/27**

(51) Int Cl.:
*C07C 1/20* [(2006.01)]     *C10G 45/00* [(2006.01)]

(21) Numéro de dépôt: **12290365.1**

(22) Date de dépôt: **24.10.2012**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **08.11.2011 FR 1103411**

(71) Demandeur: **IFP Energies Nouvelles
92852 Rueil Malmaison Cedex (FR)**

(72) Inventeurs:
• **Dupassieux, Nathalie
73470 Ayn (FR)**
• **Chapus, Thierry
69001 Lyon (FR)**

(54) **Production de carburants paraffiniques à partir de matières renouvelables par un procédé d'hydrotraitement en continu comprenant une étape de prétraitement**

(57) L'invention concerne un procédé d'hydrotraitement d'une charge issue de sources renouvelables telle que les huiles végétales pour produire des hydrocarbures paraffiniques comprenant une étape de prétraitement par cristallisation et/ou précipitation permettant l'élimination des impuretés inorganiques non solubles dans les conditions d'hydrotraitement. Le flux de la charge totale est divisé en un certain nombre de différents flux partiels égal au nombre de zones catalytiques dans le réacteur, les différents flux partiels sont injectés dans les zones catalytiques successives dans des proportions croissantes pour produire un effluent comprenant des hydrocarbures paraffiniques. L'effluent est soumis à une étape de séparation permettant de séparer une fraction gazeuse et une fraction liquide contenant les hydrocarbures paraffiniques. Au moins une partie de ladite fraction liquide est recyclée soit vers l'étape de prétraitement soit vers au moins une zone catalytique de telle sorte que le rapport massique entre ce recycle et le flux partiel introduit dans la première zone catalytique soit supérieur ou égal à 10.

**Figure 1**

EP 2 610 236 A1

**Description**

L'invention concerne un procédé pour la production d'hydrocarbures paraffiniques utilisables comme carburants par hydrotraitement de charges issues de sources renouvelables telles que les huiles et graisses d'origine végétale ou animale. En particulier, l'invention concerne un procédé pour la production d'hydrocarbures paraffiniques par hydrotraitement de charges issues de sources renouvelables, dans lequel une étape de prétraitement poussée, permettant l'élimination des impuretés inorganiques contenues dans lesdites charges, est intégrée en amont des zones catalytiques en lit fixes d'hydrotraitement.

Le contexte international actuel est marqué d'abord par la croissance rapide du besoin en carburants, en particulier de bases gazoles et kérosènes et ensuite par l'importance des problématiques liées au réchauffement planétaire et l'émission de gaz à effet de serre. Il en résulte une volonté de réduire la dépendance énergétique vis à vis des matières premières d'origine fossile et de réduction des émissions de $CO_2$. Dans ce contexte, la recherche de nouvelles charges issues de sources renouvelables constitue un enjeu d'une importance croissante. Parmi ces charges, on peut citer par exemple les huiles végétales (alimentaires ou non) ou issues d'algues et les graisses animales.

Ces charges sont principalement composées de triglycérides et d'acides gras libres, ces molécules comprenant des chaînes hydrocarbonées d'acides gras avec un nombre d'atomes de carbone compris entre 4 et 24, et un nombre d'insaturations généralement compris entre 0 et 3, avec des valeurs plus élevées pour les huiles d'algues par exemple.

La masse moléculaire très élevée (>600g/mol) des triglycérides et la viscosité élevée des charges considérées font que leur utilisation directe ou en mélange dans les bases carburants posent des difficultés pour les moteurs modernes. Cependant, les chaînes hydrocarbonées qui constituent les triglycérides sont essentiellement linéaires et leur longueur (nombre d'atomes de carbone) est compatible avec les hydrocarbures présents dans les bases carburants.

Il est donc nécessaire de transformer ces charges pour obtenir des bases carburants (y compris le diesel et le kérosène) de bonne qualité répondant notamment aux spécifications directement ou après mélange avec d'autres coupes issues de pétrole brut. Le diesel doit répondre à la spécification EN590 et le kérosène doit satisfaire aux exigences décrites dans le « International Air Transport Association matériel (IATA) Guidance Material for Aviation Turbine Fuel Specifications » comme ASTM D1655.

Une approche possible est la transformation catalytique de triglycérides en carburant paraffinique désoxygéné en présence d'hydrogène (hydrotraitement).

Lors de l'hydrotraitement les réactions subies par la charge contenant les triglycérides sont les suivantes:

- la réaction d'hydrogénation des insaturations des chaînes hydrocarbonées des acides gras des triglycérides et esters,
- les réactions de désoxygénations selon deux voies réactionnelles :

  o l'hydrodésoxygénation (HDO) conduisant à la formation d'eau par consommation d'hydrogène et à la formation d'hydrocarbures de nombre de carbone ($C_n$) égal à celui des chaînes d'acides gras initiales,
  o la décarboxylation/décarbonylation conduisant à la formation d'oxydes de carbone (monoxyde et dioxyde de carbone : CO et $CO_2$) et à la formation d'hydrocarbures comptant un carbone en moins ($C_{n-1}$) par rapport aux chaînes d'acides gras initiales,

- les réactions d'hydrodéazotation (HDN), par laquelle on désigne les réactions permettant d'enlever l'azote de la charge avec la production de $NH_3$.

L'hydrogénation des insaturations des chaînes hydrocarbonées (double liaisons carbone-carbone) est fortement exothermique et l'augmentation de température provoquée par le dégagement de chaleur peut conduire à des niveaux de température où la part des réactions de décarboxylation devient significative. Les réactions d'hydrodésoxygénation, y compris les réactions de décarboxylation, sont également des réactions exothermiques. L'hydrodésoxygénation est généralement favorisée à plus basse température par rapport à la décarboxylation/décarbonylation. Les réactions d'hydrodéazotation sont plus difficiles et nécessitent des températures supérieures à l'hydrogénation et l'hydrodésoxygénation. L'hydrodéazotation est généralement nécessaire, car les composés azotés sont généralement des inhibiteurs de catalyseurs d'hydroisomérisation qui sont optionnellement utilisés après l'hydrotraitement. L'hydroisomérisation permet d'améliorer les propriétés à froid des bases carburants après l'hydrotraitement, notamment lorsque la production de kérosène est visée.

Par conséquent, un contrôle strict de la température dans la section hydrotraitement est nécessaire, une température trop élevée présente les inconvénients de favoriser les réactions secondaires indésirables comme la polymérisation, le craquage, le dépôt de coke et la désactivation du catalyseur.

Par ailleurs, lesdites charges issues de sources renouvelables contiennent également des quantités significatives d'impuretés. Lesdites impuretés peuvent contenir au moins un élément inorganique. Lesdites impuretés contenant au moins un élément inorganique comprennent essentiellement des composés contenant du phosphore telles que les phospholipides qui sont des agents émulsifiants et tensio-actifs qui gênent les opérations de raffinage et qui appartiennent à la famille des composés glycéridiques. Lesdites impuretés contenant au moins un élément inorganique peuvent également comprendre des éléments alcalino-terreux tels que les sels d'acides phosphatidiques ou encore des métaux, des métaux alcalins, les chlorophylles ou de transition sous forme diverse.

Les phospholipides complexes et polaires sont des molécules amphiphiles possédant une "tête" apolaire lipophile constituée de deux acides gras et une "tête" polaire hydrophile basée sur le couplage d'un acide phosphorique et d'une fonction de nature variable (amino-alcool, polyol...). Lesdites impuretés peuvent également être organiques. Lesdites impuretés organiques comprennent essentiellement de l'azote telles que les sphingolipides et les dérivés de chlorophylles non chélatées.

En effet, lesdites impuretés contenant au moins un élément inorganique contenues dans lesdites charges sont miscibles dans l'huile dans les conditions d'hydrotraitement. Lors de la transformation des triglycérides et/ou des acides gras en hydrocarbures paraffiniques, lesdites impuretés se décomposent puis leurs résidus inorganiques se combinent pour former des sels non miscibles qui précipitent par exemple sous forme des phosphates mixtes de calcium et/ou de magnésium de type $Ca_xM-g_y(PO_4)_z$, insolubles dans le milieu réactionnel. La précipitation desdits sels entraine l'accumulation de solides inorganiques dans le lit catalytique et par conséquent une augmentation de la perte de charge dans le réacteur, le bouchage du lit catalytique et la désactivation du catalyseur d'hydrotraitement par bouchage des pores. La durée de cycle se trouve réduite par la présence de ces impuretés.

De plus, les impuretés azotées organiques et les impuretés azotées contenant au moins un élément inorganique présent dans ladite charge ne sont pas totalement éliminés lors de l'étape d'hydrotraitement. Il en résulte une perte de performance de l'étape d'hydroisomérisation optionnelle en aval.

La présente invention a pour objet de remédier à ces inconvénients.

Un objet de la présente invention est de fournir un procédé d'hydrotraitement de charges renouvelables permettant de favoriser majoritairement les réactions d'hydrodésoxygénation par la formation d'eau tout en permettant, à la fois :

-   de réaliser efficacement, par ce même procédé, l'hydrodéazotation nécessaire pour préserver l'activité catalytique de la section d'hydroisomérisation optionnelle et
-   de limiter le bouchage du ou des lits catalytiques contenant le catalyseur d'hydrotraitement, la désactivation dudit catalyseur et ainsi la perte de charge liée à l'accumulation de solides inorganiques dans le ou les lits catalytiques par la mise en oeuvre en amont du ou desdits lits catalytiques, d'une étape de prétraitement spécifique permettant l'élimination des impuretés inorganiques présentes dans ladite charge.

Un autre objet de la présente invention est de fournir un procédé d'hydrotraitement de charges renouvelables permettant de favoriser majoritairement les réactions d'hydrodésoxygénation et ainsi de maximiser le rendement en hydrodésoxygénation tout en améliorant la durée de vie du système catalytique d'hydrotraitement par l'élimination des espèces insolubles colmatantes.

**Etat de l'art**

De nombreux documents de l'art antérieur proposent des procédés d'hydrotraitement de charges renouvelables mettant en oeuvre une étape de prétraitement optionnelle en amont de l'hydrotraitement.

Le document US 2009/0318737 décrit un procédé pour produire des carburants et en particulier du gazole à partir de matières premières renouvelables telles que les huiles et graisses d'origine végétale et animale. Le procédé consiste à traiter une première partie d'une matière première renouvelable par hydrogénation et par désoxygénation dans une première zone de réaction et une seconde partie d'une matière première renouvelable par hydrogénation et par désoxygénation dans une seconde zone de réaction. Une partie du produit d'hydrocarbure paraffinique obtenu est recyclée à la première zone de réaction pour augmenter la solubilité de l'hydrogène dans le mélange réactionnel en utilisant un ratio recycle à la première partie de matières premières renouvelables compris entre 2 et 8 en volume (ratio massique entre 1.7 et 6.9). Le fait de maximiser la quantité d'hydrogène dans la phase liquide permet de réduire le taux de désactivation du catalyseur, ce qui permet de réduire la pression, de favoriser les réactions de décarboxylation/décarbonylation et de réduire les réactions d'hydrodésoxygénation, et donc de réduire la consommation d'hydrogène. Aucune information n'est donnée quant à la quantité d'azote dans les matières premières et les effluents paraffiniques. La charge issues de matières premières renouvelables peut avantageusement subir une étape de prétraitement de manière à éliminer les contaminants tels que par exemples les métaux alcalins présents dans ladite charge. L'étape de prétraitement peut consister en un échange d'ions sur une résine, un lavage acide, l'utilisation de lits de garde avec ou sans catalyseur de démetallation ou l'extraction au solvant et la filtration.

La demande de brevet EP 2 226 375 propose un procédé d'hydrogénation en continu d'une charge issue de sources renouvelables contenant des triglycérides dans un système de réacteur à lit fixe ayant plusieurs lits catalytiques disposés en série et comprenant un catalyseur d'hydrogénation en utilisant moins de recycle et requérant par conséquent une transformation limitée des unités existantes. La charge est introduite par une injection étagée de façon que les différents lits catalytiques reçoivent de plus en plus de charge dans le sens de l'écoulement. Le liquide recyclé n'est ajouté qu'en amont de la première zone catalytique. Cette limitation de la quantité de produit recyclé dans le réacteur permet de limiter le débit total dans le réacteur, puis la charge hydraulique en aval du réacteur. La plage préférée de recycle au total de la charge fraîche est inférieur à 1, et de préférence inférieur à 0,5 en poids. Le rapport de diluant sur charge fraîche entrant dans chaque lit catalytique est inférieur ou égal à 4 en poids. La température d'entrée est identique pour chaque lit.

La demande EP 2 226 375 privilégie la voie hydrodésoxygénation par élimination de l'oxygène et la formation de l'eau, plutôt que l'élimination de l'oxygène par des réactions de décarboxylation grâce à un contrôle des températures d'entrée dans les lits catalytiques. Le document EP 2 226 375 ne mentionne pas le problème de la présence des contaminants inorganiques dans ladite charge.

La demande de brevet US 2009/0266743 décrit un procédé de traitement d'une charge contenant des triglycérides seule ou en mélange avec une charge hydrocarbonée telle que par exemple une charge distillat moyen et en particulier une charge gazole. Le procédé de traitement consiste en un prétraitement thermique de ladite charge à une température comprise entre 40 et 540°C, éventuellement en présence d'un gaz tel que l'hydrogène, l'azote, l'hélium, le monoxyde de carbone et le dioxyde de carbone, suivi d'un hydrotraitement pour produire un carburant de type gazole.

La demanderesse a observé que la teneur en azote dans la matière première renouvelable peut varier considérablement en fonction de l'origine de la matière. En particulier, la teneur en azote est généralement plus élevée dans les graisses animales que dans les huiles végétales. En outre, le réglage de température dans les différentes zones catalytiques du réacteur d'hydrotraitement à des niveaux aussi bas que possible, afin de favoriser les réactions d'hydrodésoxygénation conduisant à la formation d'eau, peut entraîner des difficultés pour atteindre des niveaux faibles de la teneur en azote dans le combustible paraffinique produit après hydrotraitement. Ainsi, il est bien connu que les réactions d'hydrodéazotation (HDN) sont plus difficiles à réaliser que les réactions d'hydrodésulfuration (HDS) ou des réactions d'hydrodésoxygénation (HDO), et nécessitent par conséquent des températures plus élevées pour atteindre le même niveau. Une teneur trop élevée en composés azotés dans le carburant paraffinique produit par le procédé d'hydrotraitement provoque une moins bonne performance dans l'hydroisomérisation optionnelle en aval. L'hydroisomérisation (HIS) peut être avantageuse pour produire du diesel avec des propriétés d'écoulement à froid améliorée et/ou pour produire du kérosène répondant aux spécifications en point de disparition des cristaux (freezing point selon le terme anglo-saxon). Afin de compenser cet effet, il serait alors nécessaire d'augmenter la sévérité de la section HIS, conduisant à un rendement plus faible en produits de valeur comme le carburant diesel et le kérosène, et à un cycle réduit, et par conséquent à une augmentation des coûts d'exploitation.

La demanderesse a donc mis en oeuvre en amont du ou des lits catalytiques contenant le catalyseur d'hydrotraitement et de façon à augmenter la durée de vie dudit catalyseur d'hydrotraitement, une étape de prétraitement poussée de ladite charge permettant l'élimination des contaminants inorganiques, insolubles dans les conditions d'hydrotraitement, présents dans ladite charge. Ladite étape de prétraitement permet également de renforcer l'élimination des composés azotés présents dans ladite charge par adsorption de composés azotés spécifiques.

**Objet de invention**

L'objectif de la présente invention est alors, par la combinaison de l'introduction de la charge en proportions croissantes couplée avec un recycle important sur la première zone et de la mise en oeuvre d'une étape de prétraitement spécifique utilisant une partie du recycle, de proposer un procédé d'hydrotraitement de charges renouvelables permettant à la fois :

- de permettre l'élimination des impuretés inorganiques, insolubles dans les conditions d'hydrotraitement, présents dans ladite charge
- de favoriser majoritairement les réactions d'hydrodésoxygénation par la formation d'eau
- de réaliser efficacement par ce même procédé l'hydrodéazotation nécessaire pour préserver l'activité catalytique de la section d'hydroisomérisation optionnelle et
- de renforcer l'élimination de composés azotés et
- d'améliorer la durée de vie du système catalytique d'hydrotraitement.

Ainsi, la présente invention concerne un procédé d'hydrotraitement d'une charge issue de sources renouvelables pour produire des hydrocarbures paraffiniques dans lequel l'étape c) d'hydrotraitement opère en présence d'hydrogène en excès de la consommation d'hydrogène théorique et à des conditions d'hydrotraitement dans un réacteur à lit fixe ayant plusieurs zones catalytiques disposées en série et comprenant un catalyseur d'hydrotraitement caractérisé en ce que :

a) le flux de la charge totale F0 est mélangé avec un flux RPP constitué par au moins une partie de la fraction liquide R contenant des hydrocarbures paraffiniques issus de l'étape d) de séparation, ledit mélange étant chauffé à une température comprise entre 130 et 320°C,

b) Ledit mélange est introduit dans une zone de prétraitement dans laquelle l'écoulement dudit mélange se fait au travers d'un milieu poreux constitué d'un lit de particules appelé lit fixe, ledit lit fixe présentant un taux de vide compris entre 0,25 et 0,8,

c) l'effluent issu de la zone de prétraitement $(F + \varepsilon RPP)$, $\varepsilon$ étant compris entre 0 et 1, est divisé en au moins un certain nombre de différents flux partiels $(F1+ \varepsilon_1 RPP)$ à $(Fn + \varepsilon_n RPP)$ égal au nombre de zones catalytiques n dans le réacteur, le premier flux partiel $(F1+ \varepsilon_1 RPP)$ est injecté dans la première zone catalytique, le deuxième flux partiel $(F2+ \varepsilon_2 RPP)$ est injecté dans la deuxième zone catalytique et ainsi de suite, si n est supérieur à 2, la somme des $\varepsilon_i$ étant égale à $\varepsilon$,

les différents flux partiels sont injectés dans les zones catalytiques successives dans des proportions croissantes de telle manière que F1/F soit inférieur ou égal à F2/F, lui-même inférieur ou égale a F3/F et ainsi de suite jusqu'à F(n-1)/F soit inférieur ou égal à Fn/F, pour produire un effluent contenant des hydrocarbures paraffiniques,

d) ledit effluent contenant des hydrocarbures paraffiniques est soumis à au moins une étape de séparation permettant de séparer au moins une fraction gazeuse et au moins une fraction liquide contenant les hydrocarbures paraffiniques,

e) au moins une partie R de ladite fraction liquide contenant les hydrocarbures paraffiniques issue de l'étape b) est divisée en au moins un flux RLC et en ledit flux RPP recyclé en amont de l'étape a) et mélangé au flux de charge totale F0 et ledit flux RLC est divisé en au moins un certain nombre de différents flux partiels R1 à Rn inférieur ou égal au nombre de zones catalytiques n dans le réacteur, lesdits flux R1 à Rn étant recyclés en amont des zones catalytiques 1 à n, de telle sorte que le rapport massique entre le flux d'hydrocarbures paraffiniques $(R1+\varepsilon_1 RPP)$ envoyé dans la première zone catalytique et le flux partiel F1 de la charge introduite dans la première zone catalytique soit supérieur ou égal à 10.

Un intérêt de la présente invention est de pouvoir effectuer l'hydrodéazotation et l'hydrodésoxygénation dans une même zone catalytique sans faire appel à un deuxième réacteur d'hydrodéazotation en aval. En effet, l'introduction de la charge en proportions croissantes couplée avec un recycle important sur la première zone, permet d'atteindre par un profil montant de températures, une zone suffisamment chaude en fin de zone catalytique pour permettre l'hydrodéazotation tout en maintenant la température suffisamment basse à l'entrée de la zone catalytique pour favoriser les réactions d'hydrodésoxygénation. Par ailleurs, l'étape de prétraitement mise en oeuvre en amont du ou des lits catalytiques contenant les catalyseurs d'hydrotraitement permet également de renforcer l'élimination des composés azotés présents dans ladite charge par élimination des impuretés et notamment des composés azotés spécifiques tels que que les amino-alcools de type phosphatidylcholine, phosphatidyléthanolamine, phosphatydylsérine et les sphingolipides et les chlorophylles.

Un autre intérêt de la présente invention est de limiter la désactivation dudit catalyseur et la perte de charge liée à l'accumulation de solides inorganiques dans le ou les lits catalytiques et ainsi le bouchage du ou des lits catalytiques contenant le catalyseur d'hydrotraitement par la mise en oeuvre en amont du ou desdits lits catalytiques, de ladite étape de prétraitement spécifique permettant l'élimination des contaminants inorganiques présents dans ladite charge par précipitation/cristallisation et/ou adsorptions à chaud .

Un autre intérêt de la présente invention consiste à privilégier la voie hydrodésoxygénation par élimination de l'oxygène et la formation de l'eau, plutôt que l'élimination de l'oxygène par des réactions de décarboxylation par le contrôle des températures adaptée à l'hydrodésoxygénation en entrée de chaque zone catalytique. Les avantages apportés par cette solution sont une augmentation du rendement des hydrocarbures paraffiniques, et la réduction de la quantité du $CO/CO_2$ formé, ce qui permet de limiter l'effet inhibiteur du CO sur l'activité du catalyseur d'hydrotraitement. Le fait de privilégier la voie hydrodésoxygénation permet également de réduire la corrosion due à la présence de $CO_2$ dans le réacteur.

Un autre intérêt de la présente invention est la limitation de la quantité de produit recyclé dans le réacteur ce qui permet de limiter le débit total dans le réacteur, puis la charge hydraulique en aval du réacteur.

## Description

Le procédé selon la présente invention consiste à convertir en hydrocarbures paraffiniques, et plus précisément en distillats moyens (kérosènes et/ou gazoles), une large gamme de charges d'origine renouvelable, essentiellement composées de triglycérides et d'acides gras. Ces charges sont généralement caractérisées par une masse molaire élevée (supérieure à 800 g/mole le plus souvent), et les chaînes d'acides gras qui les composent ont un nombre d'atomes de carbone compris entre 4 et 24, et un nombre d'insaturations par chaîne généralement compris entre 0 et 3, avec des valeurs supérieures qui peuvent être atteintes sur certaines charges spécifiques. Parmi les charges qui peuvent être converties par le procédé selon la présente invention, on peut citer, cette liste n'étant pas exhaustive : les huiles végétales telles que les huiles de colza, de jatropha, de soja, de palme, de tournesol, d'olive, de coprah, de camelina, des huiles de poisson ou des huiles algales hétérotrophes ou autotrophes, ou encore des graisses animales telles que le suif de boeuf, ou encore des résidus issus de l'industrie papetière (tels que le "tall oil"), ou des mélanges de ces diverses charges.

De préférence les charges issues de sources renouvelables sont choisies parmi les huiles et graisses d'origine végétale ou animale, ou des mélanges de telles charges, contenant des triglycérides et/ou des acides gras libres et/ou des esters.

Toutes ces charges contiennent des teneurs en oxygène élevées, ainsi que, à des teneurs très variables selon l'origine des charges, des quantités significatives d'impuretés pouvant contenir au moins un élément inorganique et des impuretés organiques comprennent essentiellement de l'azote telles que décrites plus haut. Lesdites charges peuvent généralement comprendre une teneur en composés inorganiques comprise entre 0,1 et 2500 ppm. Les teneurs en azote et en soufre sont généralement comprises entre 1 ppm et 100 ppm poids environ et de préférence inférieures à 100 ppm, selon leur nature. Elles peuvent atteindre jusqu'à 1 % poids sur des charges particulières.

Les charges issues de sources renouvelables utilisées dans le procédé selon l'invention peuvent avantageusement être brutes, ou avoir subi au moins une étape de raffinage de l'huile à des fins alimentaires connue de l'homme du métier telle que par exemple une étape de dégommage ou de déphosphatation. Lesdites charges ayant subi au moins ladite étape de raffinage sont dites semi-raffinées et contiennent à l'issue de ce traitement encore jusqu'à 20 ppm de phosphore, calcium, magnésium, fer et/ou zinc, sous forme de phospholipides.

Dans la suite, l'invention sera décrite en se référant aux figures pour faciliter la compréhension, les figures ne limitant pas le caractère général de l'invention.

**Prétraitement**

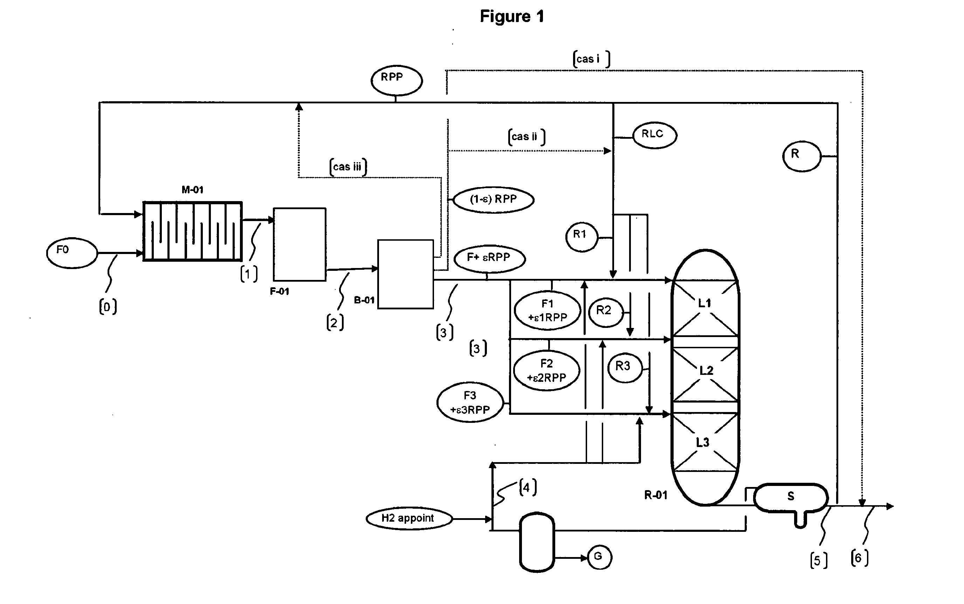

La charge brute ou ayant éventuellement subi au moins ladite étape de raffinage, encore appelée la charge fraîche totale F0, est injectée dans la ligne (0) représentée dans la figure 1.

Conformément à l'étape a) du procédé selon l'invention, le flux de la charge fraîche totale F0 est mélangé avec un flux RPP constitué par au moins une partie de la fraction liquide recyclée R contenant des hydrocarbures paraffiniques issue de l'étape d) de séparation.

En effet, selon l'invention, au moins une partie R de la fraction liquide contenant les hydrocarbures paraffiniques produit par le procédé de traitement selon l'invention et issue de l'étape d) de séparation est recyclée et est divisée en au moins un flux RLC, qui est recyclée en amont des zones catalytiques selon l'étape e) du procédé selon l'invention et en un flux RPP constitué par au moins une partie de la fraction liquide R contenant des hydrocarbures paraffiniques, recyclée en amont de la zone de prétraitement.

De préférence, le flux de la charge fraiche totale F0 est mélangé avec ledit flux RPP dans un équipement permettant la mise en contact de deux flux et le mélange homogène desdits flux. Conformément à l'invention, le mélange de la charge fraiche totale F0 et dudit flux RPP est chauffé à une température comprise entre 130 et 320°C, de préférence comprise entre 160 et 250°C et de manière préférée comprise entre 160 et 220°C. Ledit mélange peut avantageusement être chauffé par l'apport de chaleur du flux RPP. Dans le cas ou la chaleur apportée par le flux RPP est insuffisant, ledit mélange est avantageusement chauffé par tous les moyens connus de l'homme du métier tels que par exemple par passage dans un échangeur, ou un four.

La proportion du flux RPP introduite dans l'étape a) du procédé selon l'invention par rapport au flux de charge fraiche totale F0 est telle que le rapport de débit massique RPP/F0 est avantageusement compris entre 0,1 et 5, de préférence entre 0,5 et 3 et de manière préférée entre 1 et 3.

Conformément à l'étape b) du procédé selon l'invention, ledit mélange est introduit, via la conduite (1) dans une zone de prétraitement F-01 représenté sur la figure, dans laquelle l'écoulement du mélange se fait au travers d'un milieu poreux constitué d'un lit de particules appelé lit fixe, ledit lit fixe présentant un taux de vide compris entre 0.25 et 0.8.

De préférence, les particules constituant le lit sont contituées de matériaux et présentent une surface spécifique comprise entre 0,5 et 320 m$^2$/g. De manière préférée, les matériaux constituant les particules du lit sont choisis parmi les oxydes réfractaires poreux, avantageusement choisis parmi l'alumine, la silice, l'alumine activée, les silices alumines, les oxydes métalliques et les oxydes non métalliques. Lesdits matériaux peuvent avantageusement être également choisis parmi les céramiques oxydes, les céramiques non oxydes ou les céramiques composites ou des matériaux tels que les carbures de silicium, les charbons actifs, les aluminates de calcium, les métaux et le graphite.

De manière très préférée, ledit matériau est choisi parmi les oxydes réfractaires poreux.

De manière encore plus préférée, ledit mélange est introduit dans une zone de prétraitement dans laquelle l'écoulement du mélange se fait au travers d'au moins un lit fixe de particules d'un oxyde réfractaire poreux dépourvu de métaux catalytiques choisis dans les groupes 6 et 8 à 12.

Lesdites particules du lit fixe utilisé dans la zone de prétraitement selon la présente invention peuvent avantageusement être mises en forme et de préférence sous forme de particules sphériques, extrudées oblongues, cylindriques, creuses ou pleines, cylindriques torsadées, multilobées, par exemple avec un nombre de lobes compris entre 2 et 5 ou sous forme d'anneaux. De manière préférée, lesdites particules sont sous forme de particules sphérique ou extrudée, avec un diamètre compris entre 0,5 et 20 mm et de préférence entre 0,5 et 10 mm.

Lesdites particules du lit fixe peuvent avantageusement présenter des formes géométriques plus particulières afin d'augmenter son taux de vide. Lesdites particules du lit fixe peuvent également avantageusement présenter les formes suivantes : cylindres creux, anneaux creux, anneaux de Rashig, cylindres creux dentelés, cylindres creux crénelés, roues de charrettes, selle de Blend, cylindres à multiples trous.

Leur diamètre extérieur varie avantageusement entre 1 et 35 mm.

Lesdites particules du lit fixe peuvent avantageusement être utilisées seules ou en mélange.

Il est particulièrement avantageux de superposer des matériaux différents, dans au moins deux lits fixes différents de hauteur variable. Il est également particulièrement avantageux de superposer des particules de forme différentes, les particules formant le lit fixe ayant le plus fort taux de vide étant de préférence utilisées dans le ou les premiers lits fixes, en entrée de la zone de prétraitement.

Dans le cas où lesdit matériaux sont des oxydes réfractaires poreux, les oxydes réfractaires poreux préférés présentent une macroporosité.

De préférence, lesdits oxydes réfractaires poreux présentent un volume macroporeux, mesuré par intrusion au mercure, c'est à dire un volume des pores dont le diamètre moyen est supérieur à 500 A, supérieur à 0,1 ml/g, et de manière préférée, compris entre 0,125 et 0,4 ml/g. Lesdits oxydes réfractaires poreux présentent également avantageusement un volume poreux total supérieur à 0,60 ml/g, et de préférence compris entre 0,625 et 1,5 ml/g et une surface spécifique exprimée en $S_{BET}$ avantageusement comprise entre 30 m2/g et 320 m2/g.

Lors dudit prétraitement de la charge brute ou semi raffinée, on observe, après chauffage du mélange du flux de la charge fraiche totale F0 avec ledit flux RPP dans les bonnes conditions de température, la décomposition des impuretés contenant au moins un élément inorganique puis la recombinaison de leurs résidus inorganiques pour former des sels non miscibles qui précipitent et sont insolubles dans le milieu réactionnel. Cette précipitation est favorisée car les impuretés de natures polaires sont moins miscibles dans le mélange charge/huile additionnée de paraffines RPP que dans l'huile seule. Concentrés aux interfaces entre la phase riche en huile et la phase riche en paraffines et en contact avec le milieu poreux de l'étape de prétraitement, de préférence constitué de solides présentant une grande surface de contact, les impuretés inorganiques précipitent à la surface de ces derniers. Ledit précipité solide non miscible dans le milieu réactionnel se dépose sur le milieu poreux, encore appelé lit de garde avec la particularité que ledit lit de garde est utilisé avec une température minimum d'activation de la réaction thermique de cristallisation et/ou précipitation recherchée.

Ladite étape de prétraitement mise en oeuvre en amont du ou des lits catalytiques contenant les catalyseurs d'hydrotraitement permet donc l'élimination des impuretés inorganiques présentes dans la charge.

De plus, ladite étape de prétraitement permet également de renforcer l'élimination des composés azotés présents dans ladite charge et notamement des impuretés azotées organiques et des impuretés azotées contenant au moins un élément inorganique tels que que les amino-alcools de type phosphatidylcholine, phosphatidyléthanolamine, phosphatydylsérine et les sphingolipides et les chlorophylles. En effet, la présence de porosité liée à la nature du solide mis en oeuvre dans l'étape de prétraitement ou à la nature des solides issus des cristallisation ou précipitation des impuretés inorganiques permet également l'adsoption des impuretés azotées telles que les sphingolipides ou les chlorophylles ou tout autre composé azoté résiduel.

De préférence, ladite étape b) de prétraitement opère en l'absence d'hydrogène.

De préférence, ladite étape b) de prétraitement comprend en plus de la zone de prétraitement, une zone de séparation.

Dans le cas où ladite étape d) de prétraitement comprend une zone de séparation, l'effluent issu de la zone de prétraitement (F+ εRPP) avec ε compris entre 0 et 1, est ensuite éventuellement introduit, via la conduite (2) dans une zone de séparation, B-01 représentée sur la figure 1, de manière à séparer un effluent riche en paraffines (1-ε) RPP. De préférence, ε est compris entre 0,01 et 0,5.

Ledit effluent riche en paraffines (1-ε)RPP, de préférence contitué à 90% poids de paraffines est avantageusement séparé. Ledit effluent (1-ε) RPP est soit avantageusement réinjecté avec le flux RLC vers les zones catalytiques selon le cas ii) représenté sur la figure 1, soit recyclé en amont de la zone de prétraitement en mélange avec le flux RPP selon le cas iii), soit renvoyé vers le flux de parrafines en sortie de l'unité selon le cas i).

ε représente la fraction du flux paraffinique RPP entrainé avec la charge F à l'issu de l'étape b) de prétraitement.

Conformément à l'étape c) du procédé selon l'invention, l'effluent issu de la zone de prétraitement (F+εRPP), ayant éventuellement subi une étape de séparation d'un effluent riche en paraffines, est divisé en au moins un certain nombre de différents flux partiels (F1+ $\varepsilon_1$RPP) à (Fn+ $\varepsilon_n$RPP) égal au nombre de zones catalytiques n dans le réacteur, le premier flux partiel (F1+ $\varepsilon_1$RPP) est injecté dans la première zone catalytique, le deuxième flux partiel (F$_2$+ $\varepsilon_2$RPP) est injecté dans la deuxième zone catalytique et ainsi de suite, si n est supérieur à 2. Les différents flux partiels sont injectés dans les zones catalytiques successives dans des proportions croissantes de telle manière que F1/F soit inférieur ou égal à F2/F, lui-même inférieur ou égale a F3/F et ainsi de suite jusqu'à F(n-1)/F soit inférieur ou égal à Fn/F, pour produire un effluent contenant des hydrocarbures paraffiniques.

L'effluent issu de la zone de prétraitement riche en triglycérides (F+$\varepsilon$RPP) est mélangée via la conduite (3) avec un gaz riche en hydrogène (4). Ledit gaz riche en hydrogène peut également contenir d'autres composés hydrocarbures inertes, c'est à dire qui ne réagissent pas en tant que tels avec les constituants de la charge. L'hydrogène peut avantageusement venir d'un appoint d'hydrogène et/ou du recyclage du gaz riche en hydrogène issu de l'étape de séparation mise en oeuvre en aval de l'étape d'hydrotraitement. En pratique, l'hydrogène d'appoint peut provenir du reformage à la vapeur ou du reformage catalytique conventionnel éventuellement additionné d'hydrogène en provenance du reformage à la vapeur et des gaz légers issus de l'étape d) de séparation, et sa pureté en hydrogène est avantageusement comprise entre 75 et 95 % volume, les autres gaz présents étant généralement le méthane, l'éthane, le propane et le butane. Le gaz riche en hydrogène issu de l'étape de séparation mise en oeuvre en aval de l'étape d'hydrotraitement ou encore issu de l'étape de fractionnement mise en oeuvre après l'étape d'hydroisomérisation optionnelle, subit de préférence préalablement, un ou plusieurs traitements de purification intermédiaire avant d'être recyclé dans le procédé d'hydrotraitement et/ou d'hydroisomérisation.

Selon une caractéristique de l'invention, l'hydrogène utilisé est en excès par rapport à la consommation théorique, l'excédent d'hydrogène représente au moins 50% de cette consommation théorique, de préférence entre 75 et 400%, et de façon encore préférée entre 100% et 300%, 150% étant une valeur typique. La quantité d'hydrogène mise en jeu est contrôlée par la pression partielle d'hydrogène.

Pour une compréhension plus aisée de la présente invention, les définitions suivantes sont introduites. Elles font référence à la figure 1. Le réacteur comprend n zones catalytiques. Tous les flux sont exprimés en débit massique.

F0: flux total de la charge renouvelable traitée dans le procédé

F+$\varepsilon$RPP: effluent issu de la zone de prétraitement

F1+$\varepsilon_1$RPP+R1: flux partiel de la charge et flux partiel de recycle introduits dans la première zone catalytique Z1

F2+$\varepsilon_2$RPP+R2 : flux partiel de la charge et flux partiel de recycle introduits dans la deuxième zone catalytique Z2

F3+$\varepsilon_3$RPP+R3 : flux partiel de la charge et flux partiel de recycle introduits dans la troisième zone catalytique Z3 et ainsi de suite...

Fn+$\varepsilon_n$RPP+Rn : flux partiel de la charge et flux partiel de recycle introduits dans la dernière zone catalytique Zn

R: flux de recycle total : fraction liquide recyclée contenant les hydrocarbures paraffiniques issue de l'étape d) de séparation. R est divisée en un flux RLC et un flux RPP.

RLC : flux de recycle vers la zone catlytique , constitué par au moins une partie de la fraction liquide recyclée R contenant des hydrocarbures paraffiniques, recyclée dans au moins la première zone catalytique Z1. RLC peut être divisé en différents flux R1 à Rn selon le nombre de zones catalytiques dans lequel il est envoyé.

RPP: flux constitué par au moins une partie de la fraction liquide recyclée R contenant des hydrocarbures paraffiniques, recyclée en amont de la zone de prétraitement.

Le taux recycle total (RT) est défini comme le rapport massique entre le flux total de parraffines du recycle envoyé dans les zones catalytiques Z1 à Zn et le flux total de la charge renouvelable envoyé dans les zones catalytiques Z1 à Zn après passage dans la zone de prétraitement (F) : Dans la configuration (cas i), où (1-$\varepsilon$)RPP est renvoyé vers la section hydro-Isomérisation :

$$RT = (RLC+\varepsilon RPP)/F$$

Dans les configurations (cas ii) et (cas iii) où (1-$\varepsilon$)RPP est renvoyé vers la section hydrotraitement

$$RT = (RLC+RPP)/F = R/F$$

De préférence, le taux de recycle total (RT) est de préférence inférieur à 1.0, et de manière encore préférée inférieur à 0.5, lesdits flux étant exprimés en débit massique.

Le taux de recycle local vers la première zone catalytique (RF1) est défini comme le rapport massique entre le flux de paraffines du recycle envoyé dans la première zone catalytique Z1 c'est-à-dire (R1+$\varepsilon_1$RPP) et le flux partiel de la charge introduite dans la première zone catalytique 1 (F1) :

$$RF1 = (R1 + \varepsilon_1 RPP)/F1$$

Excepté durant la phase de démarrage du procédé, l'agent diluant qui est recyclé au niveau de la zone de prétraitement et au niveau des zones catalytiques d'hydrotraitement Z1-Zn est constitué par une partie du produit hydrocarbure liquide sortant de la section hydrotraitement. Cet agent diluant recyclé à l'entrée du prétraitement et à l'entrée d'au moins une zone catalytique est appelé aussi flux de recycle total R dans la suite de cette description, et son débit est noté R dans les définitions qui précèdent. La section hydrotraitement du procédé étant conçue de façon à convertir totalement les charges traitées, le flux de recycle total R produit est un flux d'hydrocarbure exempt d'oxygène, ce qui signifie que sa teneur en oxygène est inférieure à la limite de détection analytique, et est essentiellement composé de paraffines. En conséquence, ledit flux de recycle total est inerte vis-à-vis des réactions d'hydrotraitement, et joue ainsi pleinement son rôle de diluant de la charge, ce qui permet de limiter l'élévation de température dans les zones catalytiques, due à l'exothermie des réactions qui s'y produisent. Néanmoins, l'objectif est, pour une capacité donnée, c'est à dire pour un débit massique donné de charge traitée, noté F0, de limiter la quantité de recycle liquide injecté dans les zones catalytiques zone, noté RLC, ceci afin de limiter le débit total du flux alimentant ces zones catalytiques. Ceci permet d'utiliser des réacteurs d'hydrotraitement de dimensions comparables à celles des réacteurs d'hydrotraitement de coupes pétrolières comme les gazoles (et donc de limiter les coûts), de limiter les pertes de charges et d'éviter des phénomènes d'engorgement du réacteur. Par ailleurs, la zone de prétraitement mise en oeuvre en amont du ou des lits catalytiques contenant le catalyseur d'hydrotraitement utilise également un flux RPP constitué par au moins une partie de la fraction liquide R contenant des hydrocarbures paraffiniques, inerte, qui permet d'accélérer les phénomènes d'élimination des impuretés inorganiques par précipitation et/ou adsorptions de ces derniers.

Il a été découvert qu'il était avantageux d'injecter la charge dans les différentes zones catalytiques (débit massique $(F1+R1+\varepsilon_1 RPP)$ injecté dans la zone Z1, $F2+R2+\varepsilon_2 RPP$ dans la zone Z2, etc...) en faisant en sorte que des proportions croissantes de charge soient injectées dans les zones catalytiques successives. Ceci se traduit par la relation suivante :

F1/F inférieur ou égal à F2/F, lui-même inférieur on égal à F3/F, etc..., et plus généralement F(n-1)/F inférieur ou égal à Fn/F, pour le cas général où n est le nombre de zones catalytiques mises en jeu.

L'avantage apporté par une telle distribution de la charge dans les différentes zones catalytiques successives, réside dans le fait que les températures de sortie des différentes zones suivent un profil montant, ce qui permet d'atteindre des températures suffisantes afin de réduire le plus possible les teneurs résiduelles en azote non éliminé dans l'étape de prétraitement dans le produit sortant des différentes zones, ceci dans le but de préserver l'activité catalytique de la section d'hydroisomérisation en aval.

Conformément à l'invention, un flux R1 est recyclé en amont de la première zone catalytique Z1 de telle sorte que le rapport massique entre le flux de paraffines $(R1+\varepsilon_1 RPP)$ injecté en entrée de ladite première zone catalytique Z1 et le flux partiel F1 de charge introduite dans Z1, soit supérieur ou égal à 10.0, lesdits flux étant exprimés en débit massique. Ce rapport est aussi appelé recycle local (RF1) et est défini plus haut. L'utilisation d'un tel agencement des flux de charge et de recycle liquide permet :

- d'une part, d'obtenir une température homogène dans toute la section du réacteur en sortie de zone Z1.
- d'autre part, d'atteindre en sortie de zone Z1 une température suffisante, permettant d'amorcer les réactions d'hydrodéazotation et ainsi de réduire les teneurs résiduelles en azote dans l'hydrocarbure liquide produit en sortie de la zone Z1.
- d'atteindre des températures supérieures en sortie des zones catalytiques suivant la zone Z1 (zones Z2 à Zn), et suffisantes pour augmenter les taux d'élimination de l'azote.

En effet, l'introduction de la charge en proportions croissantes couplée avec un recyclée local important sur la première zone, permet d'atteindre par un profil montant de températures, une zone suffisamment chaude en fin de zone catalytique pour permettre l'hydrodéazotation tout en maintenant la température suffisamment basse à l'entrée de la zone catalytique pour favoriser les réactions d'hydrodésoxygénation. Le recyclée local supérieur ou égal à 10 signifie qu'on injecte relativement peu de charge sur la première zone, permettant ainsi d'injecter le restant de la charge dans des proportions plus importantes et croissantes dans les zones catalytiques successives. L'augmentation de la quantité de la charge injectée dans les zones successives permet d'obtenir un profil montant en températures d'entrée et de sortie des différentes zones.

Les flux entrant dans la seconde zone catalytique Z2 sont donc :

- au moins une partie de la charge additionnée de paraffines issue de la zone prétraitement injectée en entrée de zone Z2 (F2+$\varepsilon_2$RPP), telle que le rapport massique F2/F soit supérieur au rapport massique F1/F,
- le recycle liquide R1 injecté en entrée de zone Z1, composé quasi-exclusivement d'hydrocarbures paraffiniques et ayant traversé la zone Z1,
- l'effluent formé par la conversion de la charge dans la zone Z1, correspondant au débit F1. Les hydrocarbures liquides présents dans cet effluent sont exempts d'oxygène et sont quasi-exclusivement des hydrocarbures paraffiniques.
- éventuellement le recycle liquide R2, composé quasi-exdusivement d'hydrocarbures paraffiniques et constitué d'au moins une partie du flux de recycle vers la zone catlytique RLC.

Durant les phases de démarrage, une large gamme d'hydrocarbures peut être injectée, comme par exemple une coupe gazole légère, jusqu'à ce qu'une quantité suffisante de produit paraffinique soit disponible pour être recyclée en entrée d'au moins une zone catalytique.

La charge est alimentée par la ligne (0), comme le montre la figure 1, tandis que le gaz riche en hydrogène l'est par la ligne (4). La charge est injectée dans la zone de prétraitement en mélange avec le flux de paraffines RPP issu d'une partie du flux de recycle R issu d'une partie des paraffines produites en sortie de l'hydrotraitement. Le flux F+$\varepsilon$RPP sortie de la zone de prétraitement est distribué en différents flux F1+$\varepsilon_1$RPP, F2+$\varepsilon_2$RPP,..., Fn+$\varepsilon_n$RPP alimentant les différentes zones catalytiques successives. Le gaz riche en hydrogène (flux (4)) est distribué en autant de flux H1, H2, ..., Hn. Le flux F1+$\varepsilon_1$RPP est mélangée au flux de gaz (H1), le flux F2+$\varepsilon_2$RPP est mélangé au flux de gaz (H$_2$), et ainsi de suite jusqu'à la n-ième zone catalytique.

La température du flux en sortie de prétraitment F+$\varepsilon$RPP peut être ajustée afin d'atteindre une température inférieure à 180°C, de préférence inférieure à 120°C, et de manière encore préférée inférieure à 80°C. Elle doit être suffisante pour permettre un abaissement de viscosité suffisant et donc un transfert adéquat des bacs de stockage jusqu'à la section réactionnelle de l'hydrotraitement. De la même façon, la température du gaz riche en hydrogène, qui est mélangé à la charge, est la plus basse possible compatible avec l'opération du procédé, puisqu'il est avantageux pour le procédé de mélanger la charge à de l'hydrogène à basse température, de façon à abaisser la température par effet de quench appliqué aux produits hydrocarbures sortant des différentes zones catalytiques. En pratique, comme une élévation de température se produit lors de la compression du gaz riche en hydrogène, l'hydrogène est souvent refroidi après compression. De préférence, la température du gaz riche en hydrogène est comprise entre 40 et 100°C, par exemple 50°C.

La température du flux injecté à l'entrée de la zone catalytique Z1, c'est-à-dire de l'effluent issu de la zone de prétraitement (F1+$\varepsilon_1$RPP) et du recycle liquide R1 doit être soigneusement réglée.

La température dudit flux injecté à l'entrée de la zone catalytique Z1 est de préférence au minimum de 180°C, de préférence 200°C. Ceci permet l'amorçage de l'ensemble des réactions : réactions d'élimination de l'oxygène selon mécanisme conduisant à la formation d'eau, ou selon mécanisme de décarboxylation/ décarbonylation conduisant à la formation de CO$_2$ et CO, mais aussi réactions d'hydrodéazotation dans au moins une partie de cette zone catalytique. Cette température d'entrée peut être ajustée selon la nature de la charge. Avantageusement, la température à la sortie de la zone Z1 est supérieure à 250°C. Le volume de catalyseur mis en jeu dans cette zone catalytique est adapté de façon à ce que la conversion -c'est à dire le taux d'élimination de l'oxygène- soit complète en sortie de cette zone Z1.

En sortie de la zone catalytique Z1, est ajouté le second flux de charge F2+$\varepsilon_2$RPP, qui représente une plus grande proportion de charge que celle injectée en entrée de zone Z1. Ce flux de charge est additionné au flux de gaz riche en hydrogène (H$_2$), et éventuellement du recycle liquide R2 constitué par au moins une partie du flux RLC lui même issu de la fraction liquide R contenant des hydrocarbures paraffiniques issue de l'étape de séparation d). Le mélange est injecté dans la zone réactionnelle, où il est mélangé à l'effluent provenant de la zone Z1. Ceci permet un abaissement de la température du produit formé à l'issue de la zone Z1, et la température en entrée de la zone Z2 est donc généralement supérieure à celle en entrée de zone Z1. Les mêmes familles de réactions se produisent dans la zone Z2 et la zone Z1, avec une cinétique un peu plus rapide dans la zone Z2 en raison d'une température moyenne supérieure.

Le même principe se déroule ensuite dans les zones catalytiques successives, le flux de charge prétraitée (Fn + $\varepsilon_n$RPP) et éventuellement un flux de recycle Rn étant additionnés au produit totalement converti formé dans les zones catalytiques antérieures.

Au fur et à mesure que la charge se transforme en hydrocarbures paraffiniques dans une zone catalytique, la température augmente dans la zone, les réactions d'hydrogénation et de déoxygénation étant des réactions fortement exothermiques. Ainsi, la température est suffisamment élevée vers la sortie d'une zone catalytique pour pouvoir effectuer la réaction d'hydrodéazotation. La température à la sortie d'au moins une zone catalytique est de préférence supérieure à 300°C, de préférence supérieure à 320°C.

Les ratios entre débits d'hydrogène ajoutés à chacun de ces flux (F1), ... (Fn) et débits massiques de charge (F1), ... (Fn), sont du même ordre de grandeur pour l'ensemble des zones catalytiques, le ratio entre le débit d'hydrogène et le débit de charge est compris entre 300 et 1500 Nm$^3$/m$^3$, de préférence entre 600 et 900 Nm$^3$/m$^3$.

Optionnellement, il est possible d'injecter entre les zones catalytiques, un flux liquide complémentaire si le besoin de diluer davantage la charge se fait sentir.

Selon une variante préférée, des vannes de régulation des flux partiels de charge et d'hydrogène peuvent être contrôlées par les valeurs de température au niveau des entrées et des sorties des zones catalytiques de manière à ajuster les flux partiels de charge et d'hydrogène ainsi que les éventuels flux de recycle liquide R1 à Rn pendant le fonctionnement. De cette manière la température désirée à l'entrée des zones catalytiques et dans les zones catalytiques est maintenue. De même, le contrôle de la température peut être réalisé en variant la température de la charge (F+ε RPP) après prétraitement et/ou de l'hydrogène injecté et/ou du recycle dans le système de réacteur.

Le réacteur d'hydrotraitement du procédé selon l'invention peut contenir un nombre n variable de zones catalytiques. n est de préférence compris entre 3 et 10 , de préférence entre 3 et 6 . On entend par zone catalytique un lit catalytique. Chaque zone catalytique peut comprendre une ou plusieurs couches de catalyseurs, identiques ou différentes, éventuellement complétée par des couches inertes. Les zones catalytiques peuvent contenir des catalyseurs identiques ou différents.

Le type de catalyseurs utilisés dans la section hydrotraitement de ce procédé, est bien connu dans l'art antérieur.

S'agissant de catalyseurs actifs sous forme sulfures, et les charges brutes traitées ayant en général des teneurs en soufre limitées (moins de 100 ppm poids généralement, et le plus souvent moins de 50 ppm poids), il convient d'additionner à l'ensemble des flux de charge, un composé soufré tel que le Di-Méthyl-Di-Sulfure (DMDS), qui dans les conditions de température de la section hydrotraitement, se décomposera en $H_2S$ et en méthane. Ce dispositif permet de conserver sous leur forme sulfure les catalyseurs d'hydrotraitement utilisés dans le présent procédé, et ainsi de maintenir une activité catalytique suffisante tout au long du cycle. Les teneurs en DMDS injectées préconisées sont comprises entre 10 et 50 ppm poids équivalent soufre par rapport à la charge. En pratique, une addition de DMDS correspondant à 50 ppm poids équivalent soufre par rapport à la charge, est suffisante pour conserver l'activité catalytique tout au long du cycle.

Les catalyseurs utilisés dans la section hydrotraitement du procédé selon l'invention, peut être une association des catalyseurs décrits dans ce qui suit.

Le catalyseur d'hydrotraitement est un catalyseur sulfuré qui comprend un ou plusieurs éléments des groupes 6, 8, 9 et 10 de la classification périodique, de préférence le nickel, le molybdène, le tungstène et/ou le cobalt.

Le catalyseur d'hydrotraitement, de préférence utilisé en lit fixe, est avantageusement un catalyseur d'hydrotraitement comprenant une fonction hydro-déshydrogénante comprenant au moins un métal du groupe VIII et/ou du groupe VIB, pris seul ou en mélange et un support choisi dans le groupe formé par l'alumine, la silice, les silices-alumines, la magnésie, les argiles et les mélanges d'au moins deux de ces minéraux. Ce support peut également avantageusement renfermer d'autres composés et par exemple des oxydes choisis dans le groupe formé par l'oxyde de bore, la zircone, l'oxyde de titane, l'anhydride phosphorique. Le support préféré est un support d'alumine et de manière très préférée de l'alumine η, δ ou γ.

Ledit catalyseur est avantageusement un catalyseur comprenant des métaux du groupe VIII de préférence choisis parmi le nickel et le cobalt, pris seul ou en mélange, de préférence en association avec au moins un métal du groupe VIB de préférence choisi parmi le molybdène et le tungstène, pris seul ou en mélange. De façon préférée on utilise un catalyseur de type NiMo.

La teneur en oxydes de métaux des groupes VIII et de préférence en oxyde de nickel est avantageusement comprise entre 0,5 et 10 % en poids d'oxyde de nickel (NiO) et de préférence entre 1 et 5 % en poids d'oxyde de nickel et la teneur en oxydes de métaux des groupes VIB et de préférence en trioxyde de molybdène est avantageusement comprise entre 1 et 30 % en poids d'oxyde de molybdène ($MoO_3$), de préférence de 5 à 25 % en poids, les pourcentages étant exprimés en % poids par rapport à la masse totale du catalyseur.

La teneur totale en oxydes de métaux des groupes VIB et VIII dans le catalyseur utilisé est avantageusement comprise entre 5 et 40 % en poids et de manière préférée comprise entre 6 et 30 % en poids par rapport à la masse totale du catalyseur.

Le rapport pondéral exprimé en oxyde métallique entre métal (ou métaux) du groupe VIB sur métal (ou métaux) du groupe VIII est avantageusement compris entre 20 et 1 et de manière préférée entre 10 et 2.

Ledit catalyseur utilisé dans l'étape d'hydrotraitement du procédé selon l'invention doit être avantageusement caractérisé par un fort pouvoir hydrogénant de façon à orienter le plus possible la sélectivité de la réaction vers une hydrogénation conservant le nombre d'atomes de carbone des chaînes grasses c'est à dire la voie hydrodéoxygénation, ceci afin de maximiser le rendement en hydrocarbures entrant dans le domaine de distillation des gazoles et/ou des kérosènes. C'est pourquoi de manière préférée, on opère à une température relativement basse. Maximiser la fonction hydrogénante permet également de limiter les réactions de polymérisation et/ou de condensation conduisant à la formation de coke qui dégraderait la stabilité des performances catalytiques.

Ledit catalyseur utilisé dans l'étape d'hydrotraitement du procédé selon l'invention peut également avantageusement contenir un élément dopant choisi parmi le phosphore et le bore, pris seuls ou en mélange. Ledit élément dopant peut être introduit dans la matrice ou de préférence être déposé sur le support. On peut également déposer du silicium sur le support, seul ou avec le phosphore et/ou le bore et/ou le fluor.

La teneur en poids d'oxyde dudit élément dopant est avantageusement inférieure à 20 % et de manière préférée inférieure à 10 % et elle est avantageusement d'au moins 0.001 % par rapport à la masse totale du catalyseur.

Selon une variante préférée, on utilisera les catalyseurs tels que décrits dans la demande de brevet FR 2 943 071 décrivant des catalyseurs ayant une forte sélectivité pour les réactions d'hydrodésoxygénation.

Selon une autre variante préférée, on utilisera les catalyseurs tels que décrit dans la demande de brevet EP 2 210 663 décrivant des catalyseurs supportés ou massiques comprenant une phase active constituée d'un élément sulfuré du groupe VIB, l'élément du groupe VIB étant le molybdène.

On ne sortirait pas du cadre de la présente invention en utilisant dans l'étape d'hydrotraitement du procédé selon l'invention, de manière simultanée ou de manière successive, un seul catalyseur ou plusieurs catalyseurs différents dans les zones catalytiques.

Dans le cadre de l'invention, il est ainsi possible de maintenir une conversion globale de la charge issue de source renouvelable, c'est à dire une conversion par hydrodésoxygénation et décarboxylation/décarbonylation confondue, avantageusement supérieure ou égale à 90 % et de préférence une conversion globale de la charge égale à 100 %, tout en maximisant le rendement en produit d'hydrodésoxygénation ou la conversion par hydrodésoxygénation qui reste, conformément à l'invention, supérieure ou égale à 50%.

Dans le cas ou les catalyseurs ayant une forte sélectivité pour l'HDO (tels que décrits ci-dessus) sont utilisés, la conversion par hydrodésoxygénation est supérieure ou égale à 90%, de préférence supérieure ou égale à 95% et de manière préférée, supérieure ou égale à 96%. Dans ce cas la conversion par décarboxylation/décarbonylation ou rendement en produit de décarboxylation/décarbonylation de la charge issue de sources renouvelables est avantageusement limitée à au plus 10%, et de préférence limitée à au plus 5% et de manière plus préférée à au plus 4%.

La réaction d'hydrodésoxygénation conduit à la formation d'eau par consommation d'hydrogène et à la formation d'hydrocarbures de nombre de carbone égal à celui des chaînes d'acides gras initial. L'effluent issu de l'hydrodésoxygénation comporte des composés hydrocarbures pairs, tels que les hydrocarbures C14 à C24 et sont largement majoritaires par rapport aux composés hydrocarbures impairs, tels que C15 à C23, obtenu par les réactions de décarbonylation/décarboxylation. La sélectivité pour la voie hydrodésoxygénation est mise en évidence par la mesure du rendement total en hydrocarbure ayant un nombre d'atome de carbone pair et du rendement total en hydrocarbure ayant un nombre d'atome de carbone impair dans la fraction liquide valorisable en carburant. Les rendements en hydrocarbures pairs et impairs permettant d'accéder à la sélectivité de réaction (HDO/décarbonylation/décarboxylation) sont obtenus par analyse chromatographique en phase gazeuse des effluents liquides de réaction valorisable en carburant. La technique de mesure par analyse chromatographique en phase gazeuse est une méthode connue de l'homme du métier.

Sauf indication contraire, le procédé d'hydrotraitement selon l'invention est opéré dans des conditions d'hydrotraitement généralement connues dans l'art antérieur telles que celles décrites dans le brevet EP 1 741 768. La pression totale est avantageusement comprise entre 2 MPa et 15 MPa, et de préférence entre 5 MPa et 10 MPa.

Conformément à l'invention, l'hydrogène est utilisé en excès. Dans le procédé selon l'invention, le ratio entre le débit d'hydrogène et le débit de charge brute est avantageusement compris entre 300 et 1500 $Nm^3/m^3$, de préférence entre 600 et 900 $Nm^3/m^3$.

Une opération satisfaisante du procédé selon l'invention conduit à utiliser une WH globale (définie comme étant le ratio entre le débit volumique total de charge brute traitée et le volume total de catalyseur dans la section hydrotraitement) avantageusement comprise entre 0.1 et 5.0 $h^{-1}$, de préférence entre 0.1 et $1.5h^{-1}$.

Les températures utilisées dans les différentes zones de la section hydrotraitement, doivent être soigneusement contrôlées, afin d'éviter le plus possible les réactions indésirables telles que :

- les réactions de polymérisation de la charge, conduisant au dépôt de coke et donc à la désactivation du catalyseur,
- les réactions de décarboxylation/décarbonylation, conduisant à une perte de rendement en distillats moyens,

et dans le même temps de réaliser la conversion totale de la charge, aussi bien en élimination des composés oxygénés que des composés azotés. D'une manière générale, le procédé selon l'invention opère à une température comprise entre 200 et 400 °C. L'introduction de la charge en proportions croissantes couplé avec un recycle important sur la première zone catalytique permet d'obtenir un profil montant de températures en entrée des zones, mais aussi en sortie des zones.

La température à l'entrée de la zone Z1 doit de préférence être supérieure à 180°C, de manière préférée supérieure à 200°C. Les températures à l'entrée des zones catalytiques suivantes doivent de préférence être supérieures à celle en entrée de la zone précédente, généralement inférieure à 300°C et de manière préférée inférieure à 280°C.

La température à la sortie d'au moins une zone catalytique est de préférence supérieure à 300°C, de préférence supérieure à 320°C. Les températures à la sortie de chacune des zones catalytiques doivent être de préférence inférieures à 400°C, et de manière encore préférée inférieure à 380°C, de façon à limiter la désactivation du catalyseur par cokage.

Le procédé selon l'invention utilise des réacteurs en lit fixe à écoulement ruisselant connus de l'homme du métier. Les réactifs (charge et hydrogène) sont introduits dans le réacteur suivant un écoulement descendant en co-courant du haut vers le bas du réacteur. De tels réacteurs sont par exemple décrits dans le document US 7 070 745.

Entre chaque zone catalytique, il est possible d'injecter de l'hydrogène supplémentaire, afin de profiter d'un effet de trempe (quench selon le terme anglo-saxon) et d'atteindre les températures souhaitées en entrée de la zone catalytique suivante. Ainsi, des boîtes de quench sont possiblement installées entre chaque zone catalytique, afin d'assurer une meilleure homogénéité des températures sur toute la section du réacteur, et pour l'ensemble des zones catalytiques.

De la même manière, des distributeurs peuvent avantageusement être installés entre chaque zone catalytique, afin de garantir une alimentation homogène en charge liquide, sur toute la section du réacteur, et pour l'ensemble des zones catalytiques.

Un avantage du procédé selon l'invention consiste dans sa grande flexibilité, selon l'origine de la charge. Des charges différant notablement entre elles, en particulier de par leurs différents degrés d'insaturation des chaines hydrocarbonées, peuvent être converties totalement aussi bien en ce qui concerne l'élimination de l'oxygène (ce qui amène une efficacité maximale de dilution de la charge brute dans la zone suivante) qu'en ce qui concerne l'élimination de l'azote (qui permet un bien meilleur fonctionnement de l'étape d'hydroisomérisation en aval).

Optionnellement, les charges issues de sources renouvelables utilisées dans le procédé selon l'invention peuvent être traitées en mélange avec des coupes pétrolières choisies parmi les gazoles, les kérosènes, et les essences issus des procédés de raffinage pétrolier. De préférence lesdites coupes pétrolières sont des charges pétrolières de type distillats moyens choisies dans le groupe formé par les gazoles et/ou les kérosènes de distillation atmosphérique directe et les gazoles et/ou les kérosènes issus de procédés de conversion, ou l'un quelconque de leur mélange.

De préférence, les coupes pétrolières sont choisies dans le groupe formé par les gazoles atmosphériques de distillation directe, les gazoles issus de procédés de conversion tels que par exemple ceux provenant du coking, d'une hydroconversion en lit fixe (tels que ceux issus des procédés HYVAHL® de traitement des lourds mis au point par la demanderesse) ou des procédés d'hydrotraitement des lourds en lit bouillonnant (tels que ceux issus des procédés H-OIL® ), ou encore les huiles désasphaltées au solvant (par exemple au propane, au butane, ou au pentane) venant du désasphaltage de résidu sous vide de distillation directe, ou de résidus issus des procédés de conversion des charges lourdes tels que par exemple HYVAHL® et H-OIL®. Les charges peuvent aussi avantageusement être formées par mélange de ces diverses fractions. Elles peuvent également avantageusement contenir des coupes gazoles légers ou kérosènes avec un profil de distillation d'environ 100°C à environ 370°C. Elles peuvent aussi avantageusement contenir des extraits aromatiques et des paraffines obtenus dans le cadre de la fabrication d'huiles lubrifiantes.

Dans ce cas de figure, la quantité de recycle liquide envoyé à la première zone catalytique de la section hydrotraitement, peut être grandement réduit voire supprimé, puisque ces flux de charges pétrolières conduisent lors de leur traitement à l'hydrogène, à des dégagements de chaleur plus limités que lors du traitement de charges d'origine renouvelable comportant des quantités notables d'oxygène.

**Séparation**

Conformément à l'étape d) du procédé selon l'invention, l'effluent contenant des hydrocarbures paraffiniques issu de la dernière zone catalytique de l'étape c) est soumis à au moins une étape de séparation permettant de séparer au moins une fraction gazeuse et au moins une fraction liquide contenant les hydrocarbures paraffiniques. La fraction gazeuse contient l'hydrogène, le CO, le $CO_2$, l'$H_2S$ et les gaz légers. Ledit effluent contenant des hydrocarbures paraffiniques issu de la dernière zone catalytique de l'étape c) est soutiré dans la ligne (5).

Selon un premier mode de réalisation, l'étape d) de séparation peut être effectuée en une seule étape par un séparateur haute température haute pression (S) opérant sans réduction de pression à une température comprise entre 145°C et 280°C.

Selon un deuxième mode de réalisation non représenté sur la figure 1, l'étape d) de séparation comprend une séparation en deux étapes sans réduction de pression, la première séparation étant effectuée entre 145°C et 280°C dans un séparateur à haute température, la deuxième étant effectuée entre 25°C et 100°C dans un séparateur à basse température non représenté sur la figure. Dans un mode de réalisation préféré, le condensat de la fraction obtenu à partir de la deuxième étape de séparation est introduit dans un récipient de dégazage non représenté sur la figure.

De préférence, ladite fraction liquide contenant les hydrocarbures paraffiniques issu de l'étape d) de séparation gaz/liquide subit ensuite une séparation d'au moins une partie et de préférence la totalité restante de l'eau formée lors des réactions d'hydrodésoxygénation non représenté sur la figure.

Le but de cette étape est de séparer l'eau de la fraction liquide contenant les hydrocarbures paraffiniques. On entend par élimination de l'eau, l'élimination de l'eau produite par les réactions d'hydrodésoxygénation (HDO). L'élimination plus ou moins complète de l'eau est avantageusement fonction de la tolérance à l'eau du catalyseur d'hydroisomérisation utilisé dans l'étape optionnelle suivante du procédé selon l'invention. L'élimination de l'eau peut être réalisée par toutes les méthodes et techniques connues de l'homme du métier, telles que par exemple par séchage, passage sur un dessicant, flash, extraction par solvant, distillation et décantation ou par association d'au moins deux de ces méthodes.

De façon optionnelle, une étape de purification finale des différents polluants peut être mise en oeuvre par des méthodes connues de l'homme du métier telles que par exemple par strippage à la vapeur ou à l'azote ou par coalescence et/ou masse de captation.

Conformément à l'étape e) du procédé selon l'invention, au moins une partie R de ladite fraction liquide contenant les hydrocarbures paraffiniques est divisée en au moins un flux RLC et en ledit flux RPP recyclé en amont de l'étape a) et mélangé au flux de charge totale F0 et ledit flux RLC est divisé en au moins un certain nombre de différents flux partiels R1 à Rn inférieur ou égal au nombre de zones catalytiques n dans le réacteur, lesdits flux R1 à Rn étant recyclés en amont des zones catalytiques 1 à n, de telle sorte que le rapport massique entre le flux d'hydrocarbures paraffiniques (R1+$\varepsilon$1RPP) envoyé dans la première zone catalytique et le flux partiel F1 de la charge introduite dans la première zone catalytique soit supérieur ou égal à 10.

La proportion du flux RPP introduite dans l'étape a) du procédé selon l'invention par rapport au flux de recycle total R est telle que le rapport de débit massique RPP/R est avantageusement compris entre 0,1 et 0,9 et de préférence entre 0,15 et 0,8.

Au moins une autre partie de la fraction liquide contenant les hydrocarbures paraffiniques issue de l'étape d) de séparation n'est avantageusement pas recyclée.

De préférence, la partie de la fraction liquide contenant les hydrocarbures paraffiniques issue de l'étape d) de séparation qui n'est pas recyclée dans au moins une zone catalytique ou en mélange au flux de charge fraiche totale F0 en amont de l'étape de prétraitement, est envoyée soit directement au pool gazole, soit directement dans une section d'hydroisomérisation (HIS) optionnelle (6), afin de produire des bases kérosènes et/ou gazoles de bonnes qualité et en particulier des bases kérosène présentant de bonnes propriétés à froid. En effet, ladite partie de la fraction liquide contenant les hydrocarbures paraffiniques non recyclée issue de l'étape d) de séparation du procédé selon l'invention est suffisamment déazoté pour préserver l'activité catalytique de la section d'hydroisomérisation. Un réacteur d'hydrodéazotation entre l'hydrotraitement et l'hydroisomérisation n'est pas nécessaire.

*Hydroisomérisation*

Selon un mode de réalisation préféré, une partie au moins de la fraction liquide contenant les hydrocarbures paraffiniques issue de l'étape d) de séparation et non recyclée est hydroisomérisée en présence d'un catalyseur d'hydroisomérisation. L'étape optionnelle d'hydroisomérisation est avantageusement mise en oeuvre selon les conditions opératoires et en présence de catalyseurs d'hydroisomérisation connus de l'homme du métier. De préférence, les conditions opératoires et les catalyseurs utilisés dans ladite étape d'hydroisomérisation sont celles et ceux décrits dans le brevet FR 2 943 071.

L'effluent hydroisomérisé est ensuite avantageusement soumis au moins en partie, et de préférence en totalité, à une ou plusieurs séparations.

Ladite ou lesdites étape(s) de séparation peu(ven)t avantageusement comprendre une séparation flash permettant de séparer les gaz du liquide et/ou une distillation atmosphérique. De préférence Ladite ou lesdites étape(s) de séparation comprend(ent) une distillation atmosphérique. Le but de ladite étape est de séparer les gaz du liquide, et notamment, de récupérer les gaz riches en hydrogène pouvant contenir également des légers tels que la coupe $C_1$-$C_4$, une coupe essence (150 °C⁻), et au moins une coupe distillats moyens (150°C⁺) contenant du kérosène et/ou du gazole.

La valorisation de la coupe essence (ou naphta) n'est pas l'objet de la présente invention, mais cette coupe peut avantageusement être envoyée dans une unité de vapocraquage pour la production d'hydrogène ou de reformage catalytique. L'hydrogène ainsi produit peut être injecté dans l'étape d'hydrotraitement et/ou d'hydroisomérisation optionnelle.

La coupe distillats moyens qui représente les bases carburants recherchées peut comprendre une coupe contenant le gazole et le kérosène ou les deux coupes peuvent être récupérés séparément. Ces produits sont à base de sources renouvelables et ne contiennent pas de composés soufrés.

Une partie au moins de la ou des coupes distillats moyens peut avantageusement être recyclée dans l'étape d'hydrotraitement.

Selon une variante, au moins une partie de la fraction 150°C⁺ peut être recyclée dans l'étape d'hydroisomérisation. Ainsi, cette fraction est resoumise à l'isomérisation ce qui permet d'améliorer les propriétés à froid de ladite fraction.

Selon une autre variante, au moins une partie de la fraction 300°C⁺ peut être recyclée dans l'étape d'hydroisomérisation. Ainsi, cette fraction est resoumise à l'isomérisation ce qui permet de valoriser cette coupe en produits plus légers et d'améliorer les propriétés à froid.

Selon une autre variante, une partie au moins de la fraction 150°C⁺ peut être recyclée dans l'étape d'hydrotraitement.

Le gaz contenant l'hydrogène qui a été séparé lors de l'étape d) de séparation du procédé selon l'invention et/ou de l'étape optionnelle d'hydroisomérisation, est, si nécessaire, avantageusement au moins en partie traité pour réduire sa teneur en légers ($C_1$ à $C_4$). De même, il subit avantageusement un ou plusieurs traitements de purification intermédiaire, de préférence au moins un lavage avec au moins une amine, suivi de préférence d'une méthanation et/ou d'une séparation par adsorption modulée en pression (en anglais Pressure Swing Adsorption ou (PSA)), avant d'être recyclé.

On peut avantageusement introduire l'hydrogène de recycle, de préférence purifié, soit avec la charge entrant dans l'étape d'hydrodésoxygénation selon l'invention et/ou dans l'étape d'hydroisomérisation optionnelle, soit sous forme d'hydrogène de trempe entre les lits de catalyseurs d'hydrodésoxygénation selon l'invention et/ou d'hydroisomérisation.

Il est également avantageux d'additionner au gaz de recyclage une certaine quantité de composé soufré (tel que par exemple le DMDS, di-méthyl disulfure), qui par décomposition thermique produit de l'hydrogène sulfuré $H_2S$. Ce dispositif permet de maintenir si nécessaire le catalyseur de l'étape d'hydrotraitement et/ou de l'hydro-isomérisation optionnelle (dans le cas d'un catalyseur actif sous forme sulfure) à l'état sulfuré.

### EXEMPLE 1 (NON CONFORME A L'INVENTION)

Dans l'exemple 1, aucune étape de prétraitement n'est réalisée.

La charge à traiter est une huile de jatropha partiellement raffinée, dont les principales caractéristiques se trouvent dans le tableau 1 a.

Tableau 1 a

| Caractéristiques de la charge à traiter (huile de jatropha semi-raffinée) | |
|---|---|
| Charge traitée | Huile de jatropha |
| Densité à 15°C (kg/m$^3$) | 923.5 |
| Oxygène (% poids) | 11.0 |
| Hydrogène (% poids) | 11.4 |
| Soufre (ppm poids) | 4 |
| Azote (ppm poids) | 29 |
| Indice d'iode (g 12/100 g) | 95 |
| Phosphore (ppm poids) | 52 |
| Magnésium (ppm pds) | 23 |
| Calcium (ppm pds) | 35 |
| Sodium (ppm pds) | 8 |

On souhaite traiter 100 g/h (F = Fo) de cette charge dans un réacteur d'hydrotraitement constitué de 3 lits catalytiques, sans étape préalable de prétraitement.

Chaque zone catalytique est constituée d'un lit de catalyseur. Le catalyseur utilisé est identique dans les trois zones catalytiques de l'étape d'hydrotraitement et comprend 4% poids de NiO, 21% poids de $MoO_3$ et 5% poids de $P_2O_5$ supporté sur une alumine gamma. Ledit catalyseur présente un rapport atomique Ni/Mo égal à 0,4.

Les catalyseurs supportés sont préparés par imprégnation à sec des précurseurs oxydes en solution puis sulfurés in-situ préalablement au test, à une température de 350°C, à l'aide d'une charge gazole de distillation directe additivée de 2% en poids de soufre ex-diméthyldisulfure (DMDS). Après sulfuration in-situ dans l'unité sous pression, la charge issue d'une source renouvelable constituée par l'huile de colza décrite dans le tableau 1a, est envoyée dans chacune des trois zones catalytiques.

Afin de maintenir le catalyseur à l'état sulfure, on ajoute 50 ppm poids de soufre sous forme de DMDS à la charge. Dans les conditions de réactions, le DMDS est totalement décomposé pour former du méthane et de l'$H_2S$.

La quantité de recycle liquide utilisé, et injecté avec la charge brute sur la zone Z1, est de 100 g/h (R), ce qui conduit à un taux de recycle total massique de 1.0. Ce recycle est intégralement envoyé dans la 1ère zone catalytique Z1 (R1 = R et R2 = R3 = 0).

La pression opératoire totale est de 5 MPa rel. On mélange à chacun des flux de charge, de l'hydrogène pur, avec un débit tel qu'en entrée de chacune des zones catalytiques, on a un ratio $H_2$/charge brute de 700 Nm$^3$/m$^3$.

Le tableau 1b indique les débits de chacun des trois flux de charge, ainsi que les rapports diluant/charge pour chacune des 3 zones catalytiques.

Tableau 1 b

| Conditions opératoires de la section hydrotraitementet caractéristiques de l'effluent produit | |
|---|---|
| Débit charge zone Z1 (F1) (g/h) | 9.0 |
| Débit charge zone Z2 (F2) (g/h) | 36.0 |
| Débit charge zone Z3 (F3) (g/h) | 55.0 |
| Débit total charge (F) (g/h) | 100.0 |
| Débit de recycle liquide (R) (g/h) | 100.0 |
| Taux de recycle total R/F (g/g) | 1.0 |
| Taux de recycle local zone Z1 = RF1 (g/g) | 11.1 |
| Taux de recycle local zone Z2 = RF2 (g/g) | 3.0 |
| Taux de recycle local zone Z3 = RF3 (g/g) | 2.6 |
| Température entrée zone Z1 (°C) | 203 |
| Température sortie zone Z3 (°C) | 317 |
| **Caractéristiques effluent produit** | |
| Débit d'hydrocarbures produits (g/h) | 86.0 |
| Densité à 15°C (kg/m3) | 790 |
| Oxygène (% poids) | < 0.2 |
| Azote (ppm poids) | 5 |

L'expérience est réalisée ici en envoyant le recycle liquide en entrée de la première zone catalytique d'hydrotraitement Z1, sans étape de prétraitement. L'hydrocarbure produit contient, en sortie de la section hydrotraitement, une teneur significative en azote (5 ppm poids).

Le tableau 1 c donne l'évolution au cours du temps de la perte de charge dans le réacteur d'hydrotraitement.

Tableau 1c

| Perte de charge à t = 0 (bar rel) | 0.2 |
|---|---|
| Perte de charge à t = 250 h (bar rel) | 0.5 |
| Perte de charge à t = 500 h (bar rel) | 2.5 |
| Perte de charge à t = 750 h (bar rel) | 8.0 |
| Perte de charge à t = 800 h (bar rel) | 10.2 |

La perte de charge est mesurée par différence de pression donnée par deux manomètres disposés en entrée et en sortie du lit.

La perte de charge mesurée dans le réacteur d'hydrotraitement augmente de façon permanente au cours de l'essai, jusqu'à dépasser la valeur de 10 bar rel au bout de 800 heures d'essai, ce qui contraint d'interrompre l'essai au bout de cette durée. Cette augmentation de la perte de charge est due à l'accumulation, dans le réacteur, de dépôts métalliques provenant de la décomposition des phospholipides. Sur unité industrielle, ce phénomène conduirait à une durée de cycle réduite sur le réacteur d'hydrotraitement.

L'hydrocarbure liquide produit précédemment est ensuite injecté dans un réacteur contenant 100 cm$^3$ d'un catalyseur d'hydroisomérisation, composé de $NiW/SiO_2Al_2O_3$.

On injecte l'hydrocarbure avec un débit volumique de 100 cm$^3$/g, soit une WH dans la section d'hydroisomérisation de 1.0 h$^{-1}$.

L'étape d'hydroisomérisation est réalisée sur un lit fixe de catalyseur, en utilisant une pression de 5 MPa rel et une température de 330°C et un débit d'hydrogène pur tel que le rapport entre le débit volumique d'hydrogène et le débit volumique d'hydrocarbure liquide est de 700 N m$^3$/m$^3$. On obtient alors en sortie des gaz (C4), une coupe naphta (C5-150°C), et une coupe kérosène (150°C$^+$). Le tableau 1d fournit les caractéristiques de cette coupe kérosène, qui ne satisfait pas les spécifications de l'ASTM D7566 en terme de point final de distillation atmosphérique D86 (point final > 300°C), ni de point de disparition des cristaux ou "freezing point" (-5°C pour une valeur spécifiée à -40°C max).

Tableau 1d : Caractéristiques de la coupe kérosène produite

| | |
|---|---|
| Densité à 15°C (kg/m3) | 780.1 |
| Point initial D86 (°C) | 160 |
| Point final D86 (°C) | 305 |
| Azote (ppm poids) | < 0.3 |
| Point de disparition des cristaux (°C) | -5 |
| Point de flash (°C) | 50 |

## EXEMPLE 2 (CONFORME A L'INVENTION)

On traite la même charge huile de jatropha partiellement raffinée que dans l'exemple précédent, avec un débit de charge identique : Fo = F = 100 g/h. Le catalyseur ainsi que sa préparation est identique à celui de l'exemple 1.

La quantité de recycle liquide utilisé, R, est de 100 g/h. Ce recycle est divisé en un flux RLC contenant les hydrocarbures paraffiniques issus de l'étape d) de séparation, qui est envoyé intégralement vers la première zone catalytique Z1, et dont le débit est de 80 g/h, et en un flux RPP de 20 g/h, qui est mélangé avec le flux de charge huile de colza Fo. Le rapport RPP/F0 est donc de 0,2.

L'huile de jatropha est mélangée au flux RPP dans un mélangeur, et le mélange est chauffé à une température de 180°C. Ce mélange est introduit dans la zone de prétraitement, dans laquelle ledit mélange s'écoule à travers 70 cm$^3$ d'un lit fixe d'alumine sphérique présentant un taux de vide de 0,46 de diamètre compris entre 3 et 6 mm. L'alumine présente un volume macroporeux, mesuré par intrusion au mercure, c'est à dire un volume des pores dont le diamètre moyen est de 500 A, égal à 0,35 ml/g, un volume poreux total égal à 1,2 ml/g et une surface spécifique exprimée en SBET égale à 140 m$^2$/g.

A l'issue de cette étape de prétraitement, on sépare parfaitement un flux F d'huile prétraitée, et le flux RPP contenant les hydrocarbures paraffiniques. On a donc ε = 0. Ce flux RPP est mélangé au flux de recycle RLC envoyé vers la 1$^{ère}$ zone catalytique selon la configuration (ii) du schéma de procédé.

A l'issue du prétraitement, les caracéristiques trouvées sur le flux d'huile F sont explicitées dans le tableau 2a.

Tableau 2a

| Caractéristiques de la charge prétraitée (huile de jatropha) - Flux F | |
|---|---|
| Charge traitée | Huile de colza |
| Densité à 15°C (kg/m$^3$) | 923.5 |
| Oxygène (% poids) | 11.0 |
| Hydrogène (% poids) | 11.4 |
| Soufre (ppm poids) | 3 |
| Azote (ppm poids) | 13 |
| Phosphore (ppm poids) | <1 |
| Calcium (ppm poids) | <1 |
| Magnésium (ppm pds) | <1 |
| Sodium (ppm poids) | <1 |

Le prétraitement permet d'éliminer à la fois le phosphore et les éléments principaux présents dans l'huile (calcium, magnésium et sodium). Cette étape permet également d'abaisser significativement la teneur en azote de l'huile de départ, du fait de l'élimination de certains composés azotés (13 ppm au lieu de 29 ppm initialement).

Les conditions opératoires de la section hydrotraitement sont identiques à celles utilisées dans l'exemple 1.

Le taux de recycle total massique RT = (RLC + RPP) / F = R/F (configuration (ii)), est identique à l'exemple 1 et égal à 1.0,

La distribution de la charge sur les différentes zones catalytiques d'hydrotraitement, est identique à celle adoptée dans l'exemple 1. Le tableau 2b indique les débits de différents flux et en particulier de chacun des trois flux alimentant les zones catalytiques de l'hydrotraitement, ainsi que les rapports diluant/charge pour chacune des 3 zones catalytiques.

Tableau 2b

| Conditions opératoires de la section hydrotraitement et caractéristiques de l'effluent produit | |
|---|---|
| Débit charge zone Z1 (F1) (g/h) | 9.0 |
| Débit charge zone Z2 (F2) (g/h) | 36.0 |
| Débit charge zone Z3 (F3) (g/h) | 55.0 |
| Débit total charge (F) (g/h) | 100.0 |
| Débit de recycle liquide (RLC) (g/h) | 80.0 |
| Débit de recycle liquide (RPP) (g/h) | 20.0 |
| Débit de recycle liquide total (R) (g/h) | 100.0 |
| Ratio RPP/Fo (g/g) | 0.2 |
| Ratio RPP/R (g/g) | 0.2 |
| Taux de recycle liquide total RT (=R/F) (g/g) | 1.0 |
| Rapport diluant / charge zone Z1 (g/g) | 11.1 |
| Rapport diluant / charge zone Z2 (g/g) | 3.0 |
| Rapport diluant / charge zone Z3 (g/g) | 2.6 |
| Température entrée zone Z1 (°C) | 203 |
| Température sortie zone Z3 (°C) | 317 |
| **Caractéristiques effluent produit** Débit d'hydrocarbures produits (g/h) Densité à 15°C (kg/m3) Oxygène (% poids) Azote (ppm poids) | 86.0 790 < 0.2 < 0.3 |

Par rapport à l'exemple 1, la section prétraitement permet d'abaisser très sensiblement la teneur en azote du flux d'huile alimentant la section hydrotraitement, et permet d'obtenir en sortie un flux d'hydrocarbures exempt d'oxygène et d'azote (teneur en azote inférieure à la limite de détection, soit inférieure à 0.3 ppm poids).

Le tableau 2c illustre l'évolution au cours du temps de la perte de charge dans la section hydrotraitement.

Tableau 2c

| Evolution au cours du temps de la perte de charge dans le réacteur d'hydrotraitement | |
|---|---|
| Perte de charge à t = 0 (bar rel) | 0.3 |
| Perte de charge à t = 250 h (bar rel) | 0.4 |
| Perte de charge à t = 500 h (bar rel) | 0.4 |
| Perte de charge à t = 750 h (bar rel) | 0.4 |
| Perte de charge à t = 800 h (bar rel) | 0.4 |
| La perte de charge est mesurée comme dans l'exemple 1. | |

Au cours des 800 heures de fonctionnement de l'essai d'hydrotraitement, aucune augmentation notable de la perte de charge dans le réacteur n'a été observée. Ceci provient du fait que le flux d'huile alimentant le réacteur est exempt de métaux, ce qui supprime le colmatage progressif du réacteur par accumulation de dépôts solides métalliques.

Cet hydrocarbure liquide est ensuite traité dans un réacteur d'hydroisomérisation et sous des conditions opératoires strictement identiques à celles décrites dans l'exemple 1. On obtient alors en sortie des gaz (C4-), une coupe naphta (C5-150°C), et une coupe kérosène (150°C+).

Le tableau 2d fournit les caractéristiques de la coupe kérosène produite dans ces conditions.

Tableau 2d

| Caractéristiques de la coupe kérosène produite | |
|---|---|
| Densité à 15°C (kg/m3) | 764.5 |

(suite)

| Caractéristiques de la coupe kérosène produite | |
| --- | --- |
| Point initial D86 (°C) | 160 |
| Point final 86 (°C) | 295 |
| Azote (ppm poids) | < 0.3 |
| Point de disparition des cristaux (°C) | -50 |
| Point de flash (°C) | 50 |

On observe que le point de disparition des cristaux de la coupe kérosène produite selon la présente invention répond aux spécifications ASTM D7566 requérant un point de disparition des cristaux de - 40°C max.

**Revendications**

1. Procédé d'hydrotraitement d'une charge issue de sources renouvelables pour produire des hydrocarbures paraffiniques dans lequel l'étape c) d'hydrotraitement opère en présence d'hydrogène en excès de la consommation d'hydrogène théorique et à des conditions d'hydrotraitement dans un réacteur à lit fixe ayant plusieurs zones catalytiques disposées en série et comprenant un catalyseur d'hydrotraitement **caractérisé en ce que** :

   a) le flux de la charge totale F0 est mélangé avec un flux RPP constitué par au moins une partie de la fraction liquide R contenant des hydrocarbures paraffiniques issue de l'étape d) de séparation, ledit mélange étant chauffé à une température comprise entre 130 et 320°C,
   b) Ledit mélange est introduit dans une zone de prétraitement dans laquelle l'écoulement dudit mélange se fait au travers d'un milieu poreux constitué d'un lit de particules appelé lit fixe, ledit lit fixe présentant un taux de vide compris entre 0,25 et 0,8,
   c) l'effluent issu de la zone de prétraitement (F + $\varepsilon$RPP), $\varepsilon$ étant compris entre 0 et 1, est divisé en au moins un certain nombre de différents flux partiels (F1+ $\varepsilon_1$RPP) à (Fn + $\varepsilon_n$RPP) égal au nombre de zones catalytiques n dans le réacteur, le premier flux partiel (F1+ $\varepsilon_1$RPP) est injecté dans la première zone catalytique, le deuxième flux partiel (F2+ $\varepsilon_2$RPP) est injecté dans la deuxième zone catalytique et ainsi de suite, si n est supérieur à 2, la somme des $\varepsilon_i$ étant égale à $\varepsilon$,
   les différents flux partiels sont injectés dans les zones catalytiques successives dans des proportions croissantes de telle manière que F1/F soit inférieur ou égal à F2/F, lui-même inférieur ou égale a F3/F et ainsi de suite jusqu'à F(n-1)/F soit inférieur ou égal à Fn/F, pour produire un effluent contenant des hydrocarbures paraffiniques,
   d) ledit effluent contenant des hydrocarbures paraffiniques est soumis à au moins une étape de séparation permettant de séparer au moins une fraction gazeuse et au moins une fraction liquide contenant les hydrocarbures paraffiniques,
   e) au moins une partie R de ladite fraction liquide contenant les hydrocarbures paraffiniques issue de l'étape b) est divisée en au moins un flux RLC et en ledit flux RPP recyclé en amont de l'étape a) et mélangé au flux de charge totale F0 et ledit flux RLC est divisé en au moins un certain nombre de différents flux partiels R1 à Rn inférieur ou égal au nombre de zones catalytiques n dans le réacteur, lesdits flux R1 à Rn étant recyclés en amont des zones catalytiques 1 à n, de telle sorte que le rapport massique entre le flux d'hydrocarbures paraffiniques (R1+$\varepsilon_1$RPP) envoyé dans la première zone catalytique et le flux partiel F1 de la charge introduite dans la première zone catalytique soit supérieur ou égal à 10.

2. Procédé selon la revendication 1 dans lequel ladite charge issue de sources renouvelables est choisie parmi les huiles et graisses d'origine végétale ou animale, ou des mélanges de telles charges, contenant des triglycérides et/ou des acides gras libres et/ou des esters.

3. Procédé selon l'une des revendications 1 ou 2 dans lequel la proportion du flux RPP introduite dans l'étape a) du procédé selon l'invention par rapport au flux de charge fraîche totale F0 est telle que le rapport de débit massique RPP/F0 est compris entre 0,1 et 5.

4. Procédé selon la revendication 3 dans lequel rapport de débit massique RPP/F0 est compris entre 0,5 et 3.

5. Procédé selon l'une des revendications 1 à 3 dans lequel lesdites particules constituant le lit sont contituées de matériaux et présentent une surface spécifique comprise entre 0,5 et 320 m$^2$/g.

6. Procédé selon la revendication 5 dans lequel lesdits matériaux constituant les particules du lit sont choisis parmi les oxydes réfractaires poreux, les céramiques oxydes, les céramiques non oxydes ou les céramiques composites et des matériaux tels que les carbures de silicium, les charbons actifs, les aluminates de calcium, les métaux et le graphite.

7. Procédé selon la revendication 6 dans lequel ledit matériau est choisi parmi les oxydes réfractaires poreux choisis parmi l'alumine, la silice, l'alumine activée, les silices alumines, les oxydes métalliques et les oxydes non métalliques.

8. Procédé selon l'une des revendications 1 à 7 dans lequel l'effluent issu de la zone de prétraitement (F+ εRPP) est introduit dans une zone de séparation de manière à séparer un effluent riche en paraffines (1-ε) RPP.

9. Procédé selon l'une des revendications 1 à 8 dans lequel le taux recycle total (RT) est inférieur à 1.0.

10. Procédé selon l'une des revendications 1 à 9 dans lequel la proportion du flux RPP introduite dans ladite étape a) par rapport au flux de recycle total R est telle que le rapport de débit massique RPP/R est compris entre 0,1 et 0,9.

11. Procédé selon l'une des revendications 1 à 10 dans lequel ladite charge issue de sources renouvelables est traitée en mélange avec des coupes pétrolières choisies parmi les gazoles, les kérosènes et les essences issus de procédés de raffinage pétroliers.

12. Procédé selon l'une des revendications 1 à 11 dans lequel une partie au moins de la fraction liquide contenant les hydrocarbures paraffiniques issue de l'étape d) de séparation et non recyclée est hydroisomérisée en présence d'un catalyseur d'hydroisomérisation.

**Figure 1**

Europäisches
Patentamt

European
Patent Office

Office européen
des brevets

**RAPPORT DE RECHERCHE EUROPEENNE**

Numéro de la demande

EP 12 29 0365

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2010/133144 A1 (KOKAYEFF PETER [US] ET AL) 3 juin 2010 (2010-06-03) | 1-12 | INV. C07C1/20 C10G45/00 |
| Y | * [0042] et figure 2, items 16A,4A,4B,4C,5A,5B,5C et 70a,70b, 70c * | 1-12 | |
| | ----- | | |
| X | US 7 232 935 B2 (JAKKULA JUHA [FI] ET AL) 19 juin 2007 (2007-06-19) | 1-12 | |
| Y | * col. 7, lignes 37-40 et lignes 41-44; figure 1, item 41 * | 1-12 | |
| | ----- | | |
| Y | G.R. LIST ET AL.: "STEAM REFINED SOYBEAN OIL:II EFFECT OF DEGUMMING METHODS ON REMOVAL OF PROOXIDANTS AND PHOSPHOLIPIDS", JOURNAL OF THE AMERICAN OIL CHEMISTS SOCIETY, vol. 55, 31 décembre 1978 (1978-12-31), pages 280-284, XP002675354, * page 280, colonne de gauche, INTRODUCTION; lignes 5-6 * | 1-12 | |
| | ----- | | |
| Y | US 6 346 286 B1 (COUNCIL STEVEN T [US] ET AL) 12 février 2002 (2002-02-12) * figures 1,2; exemples 1-8 * | 1-12 | **DOMAINES TECHNIQUES RECHERCHES (IPC)** C07C C10G |
| | ----- | | |

Le présent rapport a été établi pour toutes les revendications

| Lieu de la recherche | Date d'achèvement de la recherche | Examinateur |
|---|---|---|
| Munich | 21 mai 2013 | Rumbo, Angel |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons

............................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 12 29 0365

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

21-05-2013

| Document brevet cité au rapport de recherche | | Date de publication | Membre(s) de la famille de brevet(s) | | Date de publication |
|---|---|---|---|---|---|
| US 2010133144 | A1 | 03-06-2010 | US 2010133144 A1<br>WO 2010077395 A1 | | 03-06-2010<br>08-07-2010 |
| US 7232935 | B2 | 19-06-2007 | AUCUN | | |
| US 6346286 | B1 | 12-02-2002 | AU 5716496 A<br>US 6346286 B1<br>WO 9633621 A1 | | 18-11-1996<br>12-02-2002<br>31-10-1996 |

EPO FORM P0460

Pour tout renseignement concernant cette annexe : voir Journal Officiel de l'Office européen des brevets, No.12/82

**EP 2 610 236 A1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20090318737 A
- EP 2226375 A
- US 20090266743 A
- FR 2943071
- EP 2210663 A
- EP 1741768 A
- US 7070745 B